# EUROPÄISCHE PATENTSCHRIFT

(11) **EP 2 765 342 B1**
(45) Veröffentlichungstag und Bekanntmachung des Hinweises auf die Patenterteilung: **06.04.2016**
(21) Anmeldenummer: 13197636.7
(22) Anmeldetag: 17.12.2013
(51) Int. Cl.: F16L 23/08

(54) **Profilschelle mit Vorpositionierer**
Profiled clamp with pre-positioner
Collier de serrage profilé avec pré-positionneur

(30) Priorität: 07.02.2013 DE 202013001224 U
(43) Veröffentlichungstag der Anmeldung: 13.08.2014
(73) Patentinhaber: NORMA Germany GmbH, 63477 Maintal (DE)
(72) Erfinder: Ghirardi, Fabio, 10142 Torino (TO) (IT); Kayacik, Erkan, 34736 Kadikoy/Istanbul (TR); Krauss, Mathias, 61130 Nidderau (DE)
(74) Vertreter: Patentanwälte Olbricht Buchhold Keulertz

(56) Entgegenhaltungen:
- EP-A2- 1 840 439
- DE-A1-102008 047 038
- FR-A1- 2 697 893
- JP-A- 2001 141 154
- US-A1- 2005 017 510
- US-A1- 2008 185 841

## Beschreibung

Die Erfindung betrifft eine Profilschelle mit einem Schellenband und einem Vorpositionierer, wobei das Schellenband zwei Flanken umfasst, und der Vorpositionierer mit dem Schellenband verbunden ist, und der Vorpositionierer mindestens einen Befestigungsabschnitt aufweist, wobei der mindestens eine Befestigungsabschnitt axial jenseits einer der Flanken und radial innerhalb der beiden Flanken verläuft.

Profilschellen werden in der Regel zum Verbinden von zwei Leitungen verwendet, die an ihren Enden Verbindungsflansche aufweisen. Die Profilschelle umgreift dabei üblicherweise die beiden Verbindungsflansche an ihren einander abgewandten Stirnseiten und drückt somit die Verbindungsflansche aneinander. Die Profilschelle hat dafür in der Regel ein V-förmiges Profil. Beim Spannen der Profilschelle wird dann nicht nur eine radiale Kraft auf die Flansche ausgeübt, sondern auch eine axial gerichtete Kraft, die die Flansche der Leitungen zusammendrückt.

Ein Setzen der bekannten Profilschellen ist jedoch in vielen Anwendungsbereichen relativ schwierig. Insbesondere bei beengten räumlichen Verhältnissen kann es für den Monteur schwierig sein, einerseits die Verbindungsflansche zusammenzudrücken und andererseits die Profilschelle in Position zu halten und zu verschließen. Insbesondere im Anwendungsbereich von Automobilmotoren kann es vorkommen, dass die Position der gewünschten Leitungsverbindung lediglich von einer Seite zugänglich ist.

Aus DE 10 2008 047 038 A1 ist nun eine Federbandschelle mit einem Schellenband und einem Vorpositionierer offenbart. Solche Federbandschellen dienen beispielsweise dazu, einen Schlauch auf einem Anschlussstutzen festzulegen. Das Schellenband von Federbandschellen hat daher auch üblicherweise einen im Wesentlichen zylinderförmigen Querschnitt, da die Federbandschelle lediglich eine radial nach innen gerichtete Kraft ausüben muss. Im vorliegenden Fall erlaubt der Vorpositionierer nun, die Federbandschelle mit Hilfe von hakenartigen Spitzen an einem Schlauch zu befestigen.

Ein solcher Vorpositionierer wäre aber aus mehreren Gründen für eine Profilschelle ungeeignet. Einerseits ist es vor dem Festlegen einer Profilschelle notwendig, dass die Profilschelle an der Position eines Verbindungsflansches soweit radial beabstandet gehalten wird, dass der zweite Verbindungsflansch noch stirnseitig an den ersten Verbindungsflansch geführt werden kann. Dies ist im Falle des oben genannten Vorpositionierers für eine Federbandschelle gerade kontraproduktiv, da es dort wünschenswert ist, die Federbandschelle bereits möglichst nah, gegebenenfalls sogar formschlüssig, am Schlauch vorzupositionieren. Weiterhin sind die erwähnten Spitzen zur Befestigung der Federbandschelle an einem Schlauch für Anwendungen von Profilschellen ungeeignet, da dort ein Durchstoßen der Leitung zu einer Leckage führen könnte.

EP 1 840 439 A2 betrifft eine Spannvorrichtung. Die Spannvorrichtung weist erste und zweite Elemente auf. Die ersten und zweiten Elemente sind an Enden über ein Verbindungselement gelenkig miteinander verbunden. Ein Montierungselement ist in Form einer Anschweißplatte vorgesehen. Die Anschweißplatte ist mit dem Verbindungselement verbunden und weist einen ersten Verbindungsteil, einen Zwischenteil und einen zweiten Verbindungsteil auf, der an einer Oberfläche angeschweißt werden kann. Die Anschweißplatte erstreckt sich in einer Axialrichtung der Spannvorrichtung jenseits der Elemente und radial innerhalb der beiden Elemente.

US 2008/0185841 A1 offenbart eine Kugelgelenkrohrschelle und zugehörige Vorpositionierungselemente. Die Rohrschelle weist ein Schellenband auf, das sich axial von einer ersten Kante zu einer zweiten Kante erstreckt. In Umfangsrichtung erstreckt es sich von einem ersten Ende zu einem zweiten Ende. Ein Auslegearm findet Verwendung im Zusammenhang mit der Rohrschelle. Der Auslegearm steht in Eingriff mit einem Spannmechanismus. Der Auslegearm hat eine Basis, die an einem zweiten Rohr befestigt ist, und einen Arm. Der Arm ist derartig ausgebildet, dass er mit einer ersten und zweiten Öffnung des Spannmechanismus in Eingriff steht. Der Arm erstreckt sich radial jenseits der Basis und ist in Axialrichtung gebogen; die Basis und der Arm sind über ein Verbindungsstück verbunden.

FR 2 697 893 zeigt eine Profilschelle zur Verbindung zweier Rohre. Die Profilschelle weist zwei Halbschalen auf. Die Halbschalen weisen jeweils an einem ihrer Enden ein Gabelstück auf. Die Enden der beiden Halbschalen können an dem Gabelstück miteinander verbunden werden. Die Verbindung kann beispielsweise über eine Schraube hergestellt werden. Die jeweils anderen Enden der beiden Halbschalen sind schwenkbar mit einem Stützelement verbunden. Das Stützelement weist eine Öffnung auf, in der ein Schaft aufgenommen werden kann. Der Schaft ist mittels einer Verlängerung mit einem Rohrteil verbunden.

US 2005/0017510 A1 betrifft ein Spannsystem für eine versiegelte Verbindung zwischen zwei Rohren, die Stützflächen aufweisen. Das Spannsystem weist eine Klemmschelle mit einem Schellenband auf. Das Schellenband weist zwei Enden auf, die im Wesentlichen radial ausgebildet sind. Das Spannsystem weist weiterhin eine Unterlegscheibe auf, die an der Klemmschelle befestigt ist. Die Unterlegscheibe weist Befestigungsauflagen auf, deren freie Enden mit dem Schellenband in Eingriff gebracht werden können. Die Befestigungsauflagen können zur Vorpositionierung auf einem Rohr befestigt werden.

Der Erfindung liegt also die Aufgabe zugrunde, einen Vorpositionierer für eine Profilschelle zur Verfügung zu stellen, der die Installation von Profilschellen erleichtert.

Erfindungsgemäß wird diese Aufgabe dadurch gelöst, dass das Schellenband vier Segmente aufweist, und der Vorpositionierer nur mit zwei der vier Segmente in Eingriff steht.

Ein Vorpositionier mit einem derartigen Befestigungsabschnitt erlaubt es dann, die Profilschelle mit einem ausreichend großen radialen Abstand an einer ersten Leitung im Bereich eines ersten Verbindungsflansches vorzupositionieren. Das Schellen band der Profilschelle steht dann auch einem stirnseitigen Heranführen eines zweiten Verbindungsflansches an den ersten Verbindungsflansch nicht im Wege. Die Installation einer solchen Profilschelle ist somit deutlich vereinfacht und kann problemlos von einem einzelnen Monteur durchgeführt werden. Insbesondere ist es nicht mehr notwendig, dass ein Monteur die Profilschelle in einem ausreichend weit aufgespreizten Zustand im Bereich des ersten Verbindungsflansches in Position hält, um den zweiten Verbindungsflansch heranführen zu können.

Weiterhin ist es von Vorteil, wenn der Vorpositionierer mindestens eine Brücke umfasst. Eine solche Brücke kann dann beispielsweise die Form eines Blechstreifens haben und vom Schellenband aus axial an den Flanken des Schellenbandes vorbei und radial nach innen über die Flanken des Schellenbandes hinaus bis an eine radiale Au βenseite einer der Leitungen führen. Der mindestens eine Befestigungsabschnitt kann dann beispielsweise an dem dem Schellenband abgewandten Ende der Brücke angeordnet sein.

Weiterhin ist es bevorzugt, wenn der Vorpositionierer mindestens ein im Wesentlichen flaches Verbindungselement aufweist. Ein solches Element erlaubt dann eine möglichst einfache Befestigung des Vorpositionierers am Schellenband bzw. an einer Leitung. Der Vorpositionierer kann dann beispielsweise im Bereich von mindestens einem dieser im Wesentlichen flachen Verbindungselemente stoffschlüssig mit einer ersten Leitung und/oder an einem anderen Verbindungselement mit dem Schellenband verbunden, insbesondere verschweißt, werden.

Es ist weiterhin vorteilhaft, wenn der Vorpositionierer mindestens ein Trägerband umfasst. Ein solches Trägerband erlaubt es dabei, eine zuverlässigere Vorpositionierung des Schellenbandes zu erreichen. So kann ein solches Trägerband beispielsweise je nach Anordnung eine Federkraft auf das Schellenband bzw. auf einen Endabschnitt einer Leitung ausüben. Somit kann in einigen Fällen auf eine stoffschlüssige Verbindung, beispielsweise durch einen Schweißvorgang, verzichtet werden.

Es ist weiterhin von Vorteil, wenn mindestens ein Befestigungsabschnitt ein Trägerband umfasst. In einer solchen Ausführungsform ist es nun beispielsweise möglich, dass das Trägerband einen Endabschnitt einer ersten Leitung jenseits des ersten Verbindungsflansches formschlüssig umgreift. Mindestens ein Trägerband ist also axial jenseits einer der Flanken und radial innerhalb der beiden Flanken angeordnet. Dadurch wird sichergestellt, dass das Schellenband weit genug radial beabstandet vom ersten Verbindungsflansch gehalten werden kann.

Es ist weiterhin bevorzugt, wenn mindestens ein Trägerband radial außen am Schellenband angeordnet ist. In dieser Ausführungsform lässt sich die Profilschelle besonders gut in einer gewählten aufgespreitzen Position halten. Es ist hierbei vorstellbar, dass der Vorpositionierer sowohl ein zum Schellenband axial versetztes Trägerband als auch ein radial außen am Schellenband angeordnetes Trägerband aufweist.

Es ist weiterhin bevorzugt, wenn an den umfangseitigen Enden mindestens eines Trägerbandes je eine Brücke angeordnet ist, wobei die Brücken mit dem Schellenband radial außen verbunden sind. In dieser Ausführungsform ist es beispielsweise möglich, den Vorpositionierer aus einem einzigen gebogenen Blechstreifen herzustellen.

Es ist weiterhin von Vorteil, wenn der Vorpositionierer an mindestens einer Position mit dem Schellenband stoffschlüssig verbunden, insbesondere verschweißt, ist. Somit kann der Vorpositionierer besonders einfach gemeinsam mit der Profilschelle im Bereich des ersten Verbindungsflansches vorpositioniert werden.

Es ist bevorzugt, wenn die Profilschelle zwei Spannbacken aufweist und der Vorpositionierer mit dem Schellenband im Bereich der Spannbacken an mindestens zwei Positionen verbunden ist. In dieser Ausführungsform kann die Profilschelle zusätzlich durch den Vorpositionierer unter Vorspannung gehalten werden. Es wird somit vermieden, dass sich die Profilschelle ungewollt vor dem letztendlichen Festlegen radial aufweitet.

Es ist von Vorteil, wenn der Vorpositionierer die Profilschelle mit einer Federkraft unter radialer Vorspannung hält. Dies kann auf mehrere Arten erreicht werden. Beispielsweise, indem der Vorpositionierer mit dem Schellenband mit mindestens zwei umfangseitig beabstandeten Brücken verbunden ist. Alternativ kann dies auch dadurch erreicht werden, dass der Vorpositionierer ein radial außen am Schellenband angeordnetes Trägerband umfasst.

Erfindungsgemäß weist das Schellenband vier Segmente auf, und der Vorpositionierer steht nur mit zwei der vier Segmente in Eingriff.

In dieser Ausführungsform ist es einerseits möglich, dass der Vorpositionierer mit dem Schellenband an nur zwei Segmenten verbunden ist und das Schellenband in Position hält. Andererseits lässt sich die Profilschelle mit den zwei verbleibenden freien Segmenten weiterhin öffnen oder schließen, sofern dies während der Installation erforderlich wird. Dies ist insbesondere während des Verschlussvorgangs von Vorteil, da hierbei die freien Endabschnitte der Profilschelle zusammengeführt werden müssen, um beispielsweise das Anziehen einer Schraube oder das Setzen eines Bolzens zum Verschluss der Profilschelle zu ermöglichen. Wenn nun zwei Segmente des Schellenbandes frei bleiben, lassen sich diese radial nach innen biegen, um den Verschluss zu erleichtern, gleichzeitig wird aber eine Lockerung der Vorpositionierung vermieden.

Die Erfindung wird im Folgenden anhand mehrerer bevorzugter Ausführungsbeispiele in Verbindung mit mehreren Figuren beschrieben. Hierin zeigen:
- Fig. 1: eine Profilschelle mit einem Vorpositionierer in einer ersten Ausführungsform in stirnseitiger Ansicht,
- Fig. 2: die Ausführungsform entsprechend Fig. 1 in Seitenansicht,
- Fig. 3: die Ausführungsform entsprechend der Fig. 1 und 2 in perspektivischer Darstellung,
- Fig. 4: eine zweite Ausführungsform einer Profilschelle mit einem Vorpositionierer in einer stirnseitigen Ansicht,
- Fig. 6: die Ausführungsform entsprechend den Fig. 4 und 5 in einer perspektivischen Darstellung,
- Fig. 7: eine Profilschelle mit einem Vorpositionierer entsprechend einer dritten Ausführungsform der Erfindung in stirnseitiger Ansicht bei geöffneter Profilschelle,
- Fig. 8: die Ausführungsform entsprechend Fig. 7 in perspektivischer Ansicht und
- Fig. 9: die Ausführungsform entsprechend Fig. 7 und 8 in stirnseitiger Ansicht bei geschlossener Profilschelle.

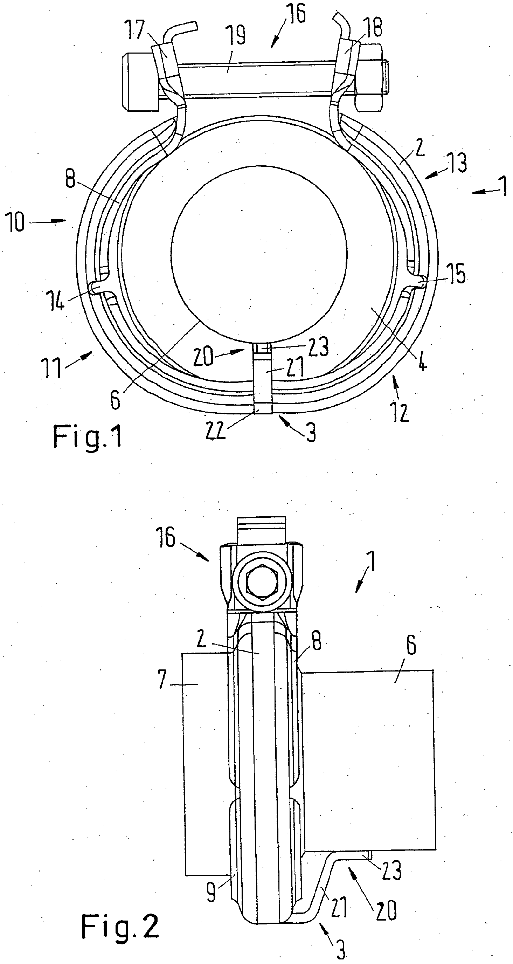

Fig. 1 zeigt eine Profilschelle 1 mit einem Schellen band 2 und einem Vorpositionierer 3. Die Profilschelle 1 umgreift dabei im geschlossenen Zustand die Verbindungsflansche 4, 5 zweier Leitungen 6, 7.

Das Schellenband 2 weist ein im Wesentlichen V-förmiges Profil mit Flanken 8, 9 auf, die im geschlossenen Zustand der Schelle die Verbindungsflansche 4, 5 axial zusammendrücken. In der vorliegenden Ausführungsform weist das Schellen band 2 vier Segmente 10, 11, 12, 13 auf, zwischen denen Unterbrechungen 14, 15 angeordnet sind. Durch diese Unterbrechungen 14, 15 weist die Profilschelle 1 eine etwas höhere Elastizität auf, so dass sie sich leichter auf und zu biegen lässt, ohne dass die einzelnen Segmente 10, 11, 12, 13 dabei verbogen werden.

Die Profilschelle weist weiterhin eine Verbindungsgeometrie 16 auf. So sind an den umfangseitigen Enden des Schellenbandes 2 Spannbacken 17, 18 angeordnet. Die Spannbacken 17, 18 können dabei mit einer Spannvorrichtung 19 aufeinander zu bewegt werden, um die Profilschelle 1 zu schließen.

Die Profilschelle 1 weist nun weiterhin einen Vorpositionierer 3 auf, mit dem die Profilschelle am Ende einer ersten Leitung 6 im Bereich eines ersten Verbindungsflansches 4 vorpositioniert werden kann. Der Vorpositionierer 3 umfasst in der vorliegenden Ausführungsform einen Befestigungsabschnitt 20, der Bestandteil einer Brücke 21 ist. Der Vorpositionierer ist dabei mit dem Schellenband 2 radial von außen verbunden und liegt gleichzeitig an der ersten Leitung 6 radial außen an. Der Befestigungsabschnitt 20 ist dabei radial innerhalb der Flanken 8, 9 des Schellenbandes 2 angeordnet, wobei dies sowohl im geöffneten als auch im geschlossenen Zustand der Profilschelle 1 der Fall ist. Der radiale Abstand zwischen dem Befestigungsabschnitt 20 und den Flanken 8, 9 kann sich jedoch durch den Verschlussvorgang der Profilschelle 1 verringern.

Zur Vorpositionierung wird der Vorpositionierer 3 mit seinem mindestens einen Befestigungsabschnitt 20 sowohl an der Profilschelle 1 als auch an der Leitung 6 festgelegt. Der Vorpositionierer 3 kann aber auch bereits stoffschlüssig mit der Profilschelle 1 verbunden sein, so dass zur Vorpositionierung lediglich eine Verbindung des Befestigungsabschnitts 20 an der Leitung 6 notwendig ist. Dadurch, dass der mindestens eine Befestigungsabschnitt 20 radial innerhalb der Flanken 8, 9 des Schellenbandes 2 angeordnet ist, wird nun sichergestellt, dass die Flanken 8, 9 des Schellenbandes 2 nach der Vorpositionierung noch soweit radial von den Leitungen 6, 7 beabstandet sind, dass die Verbindungsflansche 4, 5 problemlos stirnseitig aneinander geführt werden können. Hierbei ist es dann auch nicht mehr nötig, dass der Monteur die Profilschelle 1 in Position am ersten Verbindungsflansch 4 hält.

Der Vorpositionierer 3 weist hier zwei im Wesentlichen flache Verbindungselemente 22, 23 auf. Mit Hilfe der Verbindungselemente 22, 23 lässt sich leicht eine stoffschlüssige Verbindung zwischen dem Vorpositionierer 3 und dem Schellenband 2 bzw. der ersten Leitung 6 herstellen. So kann der Vorpositionierer beispielsweise mit dem Verbindungselement 22 mit dem Schellenband 2 und/oder mit dem Verbindungselement 23 mit der ersten Leitung 6 verschweißt werden.

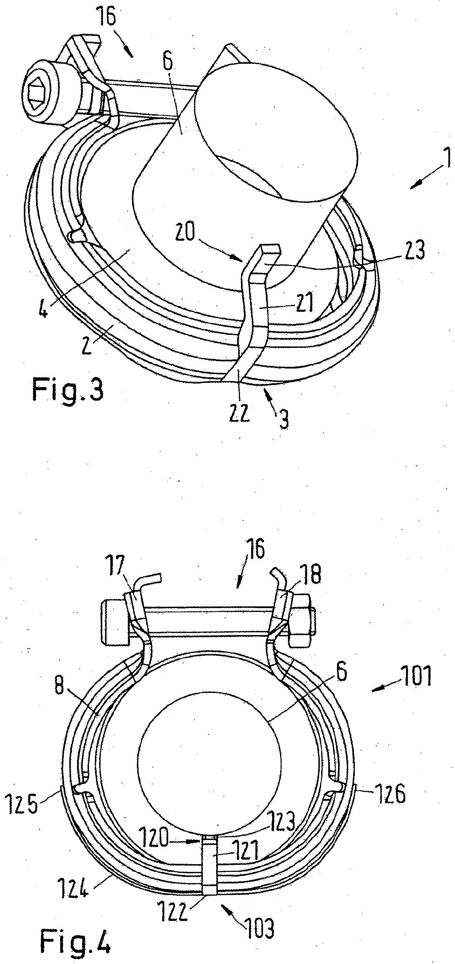

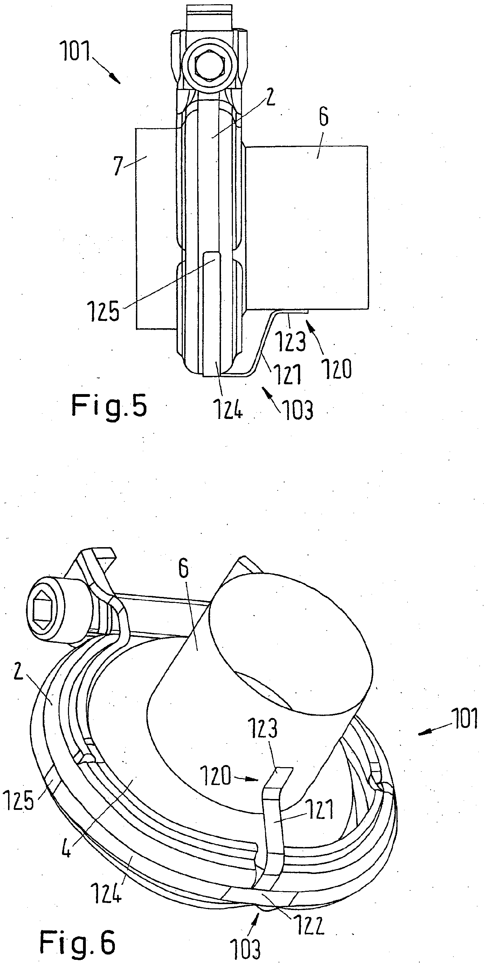

In den Fig. 4, 5 und 6 ist eine zweite Ausführungsform der Erfindung dargestellt. Der Vorpositionierer 103 weist hier wiederum einen Befestigungsabschnitt 120, der Bestandteil einer Brücke 121 ist, sowie Verbindungselemente 122, 123 auf. Zusätzlich umfasst der Vorpositionierer 103 ein Trägerband 124, das das Schellenband 2 radial von außen umgreift. Im vorliegenden Fall ist das Trägerband 124 am Schellenband 2 radial außen und umfangseitig in einem Winkelbereich von etwa 180° angeordnet. Das Trägerband 124 steht somit auch nur mit zwei Segmenten 11, 12 der Profilschelle 110 in Eingriff. Die Segmente 10, 13 können somit nach wie vor auf bzw. zu gebogen werden, ohne dass die Vorpositionierung wesentlich beeinflusst wird. Der Vorpositionierer 103 kann weiterhin an den umfangseitigen Enden 125, 126 des Trägerbandes 124 stoffschlüssig mit dem Schellenband 2 verbunden sein. Hierdurch ergibt sich eine zuverlässigere Vorpositionierung der Profilschelle 101, insbesondere ein ungewolltes Lösen oder Kippen der Profilschelle in der vorpositionierten Stellung kann so vermieden werden.

Der Vorpositionierer kann selbstverständlich auch noch weitere Befestigungsabschnitte 20, 120 aufweisen, falls eine höhere Stabilität des Vorpositionierers 3, 103 gewünscht ist.

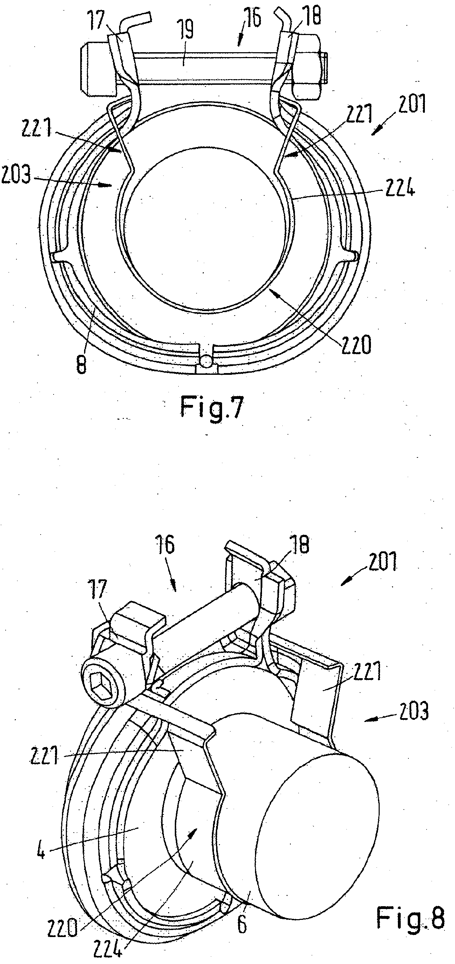

In den Fig. 7, 8 und 9 ist schließlich eine dritte Ausführungsform der Erfindung dargestellt. Der Vorpositionierer 203 umfasst in diesem Fall ein Trägerband 224, das axial versetzt zum Schellenband 2 angeordnet ist. Das Trägerband 224 ist dabei weiterhin radial innerhalb der Flanken des Schellenbandes 2 angeordnet. So kann das Trägerband 224 zumindest teilweise formschlüssig radial außen an der ersten Leitung 6 angeordnet werden. Vorzugsweise umfasst das Trägerband 224 dabei die erste Leitung 6 umfangseitig um mehr als 180° und liegt unter einer radial nach innen gerichteten Federspannung an der ersten Leitung 6 an. Der Befestigungsabschnitt 220 wird hier als im Wesentlichen durch das Trägerband 224 gebildet.

Der Vorpositionierer 203 weist weiterhin an den umfangseitigen Enden des Trägerbandes 224 je eine Brücke 221 auf. Die Brücken 221 verlaufen dabei radial nach außen und axial in Richtung des Schellenbandes 2. Die Brücken 221 sind weiterhin mit dem Schellenband 2 beispielsweise radial von außen verbunden. Vorzugsweise stehen die Brücken 221 radial von außen mit dem Schellenband 2 im Bereich der Spannbacken 17, 18 in Eingriff. Dadurch lässt sich zusätzlich eine Vorverschlussfunktion durch den Vorpositionierer 203 realisieren. Es wird also vermieden, dass sich die Profilschelle 201 in der vorpositionierten Position ungewollt um mehr als ein bestimmtes Maß öffnen kann. Somit kann sichergestellt werden, dass die Verbindungsflansche 4, 5 problemlos stirnseitig aneinander geführt werden können und gleichzeitig bleibt die Profilschelle 201 ausreichend ortsfest positioniert. Der Vorpositionierer 203 nach der dritten Ausführungsform weist aufgrund seines ein Trägerband 224 umfassenden Befestigungsabschnitts 220 den Vorteil auf, dass beispielsweise auf stoffschlüssige Verbindungen zwischen dem Vorpositionierer 203 und der ersten Leitung 6 verzichtet werden kann. Somit lässt sich die Profilschelle auch im vorpositionierten Zustand noch winkelmäßig oder axial verlagern. Auch eine stoffschlüssige Verbindung zwischen dem Vorpositionierer 203 und dem Schellenband 2 ist in der vorliegenden Ausführungsform nicht zwingend notwendig. Daher kann der Vorpositionierer 203 sogar nach Abschluss der Schellenmontage entfernt und gegebenenfalls wieder verwendet werden.

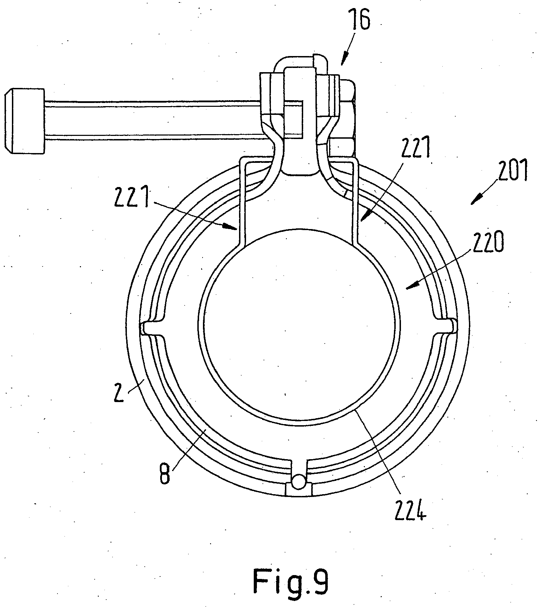

Ein Vergleich von Fig. 7 und 9 zeigt außerdem, dass der Befestigungsabschnitt 220 sowohl bei noch offener als auch bei geschlossener Profilschelle 201 radial innerhalb der beiden Flanken 8, 9 verläuft.

## Patentansprüche

1. Profilschelle (1) mit einem Schellenband (2) und einem Vorpositionierer (3, 103, 203), wobei das Schellenband (2) zwei Flanken (8, 9) umfasst, und der Vorpositionierer (3, 103, 203) mit dem Schellenband (2) verbunden ist, und der Vorpositionierer (3, 103, 203) mindestens einen Befestigungsabschnitt (20, 120, 220) aufweist, wobei der mindestens eine Befestigungsabschnitt (20, 120, 229) axial jenseits einer der Flanken (8) und radial innerhalb der beiden Flanken (8, 9) verläuft, **dadurch gekennzeichnet, dass** das Schellenband (2) vier Segmente (10, 11, 12, 13) aufweist, und der Vorpositionierer (3, 103, 203) nur mit zwei der vier Segmente (11, 12) in Eingriff steht.

2. Profilschelle nach Anspruch 1, **dadurch gekennzeichnet, dass** der Vorpositionierer (3, 103, 203) mindestens eine Brücke (21, 121, 221) umfasst.

3. Profilschelle nach einem der Ansprüche 1 oder 2, **dadurch gekennzeichnet, dass** der Vorpositionierer (3, 103, 203) mindestens ein im Wesentlichen flaches Verbindungselement (22, 23, 122, 123) aufweist.

4. Profilschelle nach einem der Ansprüche 1 bis 3, **dadurch gekennzeichnet, dass** der Vorpositionierer (3, 103, 203) mindestens ein Trägerband (124, 224) umfasst.

5. Profilschelle nach Anspruch 4, **dadurch gekennzeichnet, dass** mindestens ein Befestigungsabschnitt (20, 120, 220) ein Trägerband (224) umfasst.

6. Profilschelle nach Anspruch 4 oder 5, **dadurch gekennzeichnet, dass** mindestens ein Trägerband (124) radial außen am Schellenband (2) angeordnet ist.

7. Profilschelle nach einem der Ansprüche 4 bis 6, **dadurch gekennzeichnet, dass** an den umfangseitigen Enden des mindestens einen Trägerbandes (124, 224) je eine Brücke (21, 121, 221) angeordnet ist, wobei die Brücken (21, 121, 221) mit dem Schellenband (2) radial außen verbunden sind.

8. Profilschelle nach einem der Ansprüche 1 bis 7, **dadurch gekennzeichnet, dass** der Vorpositionierer (3, 103, 203) an mindestens einer Position mit dem Schellenband (2) stoffschlüssig verbunden, insbesondere verschweißt, ist.

9. Profilschelle nach einem der Ansprüche 1 bis 8, **dadurch gekennzeichnet, dass** die Profilschelle (1, 101, 201) zwei Spannbacken (17, 18) aufweist und der Vorpositionierer (3, 103, 203) mit dem Schellenband (2) im Bereich der Spannbacken (17, 18) an mindestens zwei Positionen verbunden ist.

10. Profilschelle nach einem der Ansprüche 1 bis 9, **dadurch gekennzeichnet, dass** der Vorpositionierer (3, 103, 203) die Profilschelle (1, 101, 201) mit einer Federkraft unter radialer Vorspannung hält.

## Claims

1. Profile clamp (1), comprising a clamping band (2) and a pre-positioner (3, 103, 203), the clamping band (2) having two flanks (8, 9), and the pre-positioner (3, 103, 203) being connected to the clamping band (2), and the pre-positioner (3, 103, 203) having at least one attachment section (20, 120, 220), the at least one attachment section (20, 120, 220) extending axially beyond one of the flanks (8) and radially inside the two flanks (8, 9), **characterised in that** the clamping band (2) comprises four segments (10, 11, 12, 13), and the pre-positioner (3, 103, 203) engages with only two of the four segments (11, 12).

2. Profile clamp according to claim 1, **characterised in that** the pre-positioner (3, 103, 203) comprises at least one bridge (21, 121, 221).

3. Profile clamp according to one of claims 1 or 2, **characterised in that** the pre-positioner (3, 103, 203) comprises at least one essentially flat connecting element (22, 23, 122, 123).

4. Profile clamp according to one of claims 1 to 3, **characterised in that** the pre-positioner (3, 103, 203) comprises at least one support band (124, 224).

5. Profile clamp according to claim 4, **characterised in that** at least one attachment section (20, 120, 220) comprises a support band (224).

6. Profile clamp according to claim 4 or 5, **characterised in that** at least one support band (124) is arranged radially outside the clamping band (2).

7. Profile clamp according to one of claims 4 to 6, **characterised in that** a bridge (21, 121, 221) is arranged at respective circumferential ends of the at least one support band (124, 224), the bridges (21, 121, 221) being connected to the clamping band (2) radially on the outside.

8. Profile clamp according to one of claims 1 to 7, **characterised in that** the pre-positioner (3, 103, 203) is materially bonded, particularly welded, to the clamping band (2) in at least one position.

9. Profile clamp according to one of claims 1 to 8, **characterised in that** the profile clamp (1, 101, 201) comprises two clamping jaws (17, 18) and the pre-positioner (3, 103, 203) is connected to the clamping band (2) in at least two positions in the region of the clamping jaws (17, 18).

10. Profile clamp according to one of claims 1 to 9, **characterised in that** the pre-positioner (3, 103, 203) holds the profile clamp (1, 101, 201) under radial pretension by spring force.

## Revendications

1. Collier de serrage profilé (1) avec une bande de collier de serrage (2) et avec un prépositionneur (3, 103, 203), la bande de collier de serrage (2) comprenant deux flancs (8, 9), le prépositionneur (3, 103, 203) étant relié à la bande de collier de serrage (2) et le prépositionneur (3, 103, 203) comportant au moins un tronçon de fixation (20, 120, 220), l'au moins un tronçon de fixation (20, 120, 229) s'étendant axialement de l'autre côté d'un des flancs (8) et radialement à l'intérieur des deux flancs (8, 9), **caractérisé en ce que** la bande de collier de serrage (2) comporte quatre segments (10, 11, 12, 13) et **en ce que** le prépositionneur (3, 103, 203) est en prise seulement avec deux des quatre segments (11, 12).

2. Collier de serrage profilé selon la revendication 1, **caractérisé en ce que** le prépositionneur (3, 103, 203) comprend au moins un pont (21, 121, 221).

3. Collier de serrage profilé selon l'une des revendications 1 ou 2, **caractérisé en ce que** le prépositionneur (3, 103, 203) comporte au moins un élément de liaison (22, 23, 122, 123) sensiblement plat.

4. Collier de serrage profilé selon l'une des revendications 1 à 3, **caractérisé en ce que** le prépositionneur (3, 103, 203) comprend au moins une bande porteuse (124, 224).

5. Collier de serrage profilé selon la revendication 4, **caractérisé en ce qu'**au moins un tronçon de fixation (20, 120, 220) comprend une bande porteuse (224).

6. Collier de serrage profilé selon la revendication 4 ou 5, **caractérisé en ce que** l'au moins une bande porteuse (124) est agencée radialement à l'extérieur sur la bande de collier de serrage (2).

7. Collier de serrage profilé selon l'une des revendications 4 à 6, **caractérisé en ce que**, aux extrémités périphériques de l'au moins une bande porteuse (124, 224), est agencé à chaque fois un pont (21, 121, 221), les ponts (21, 121, 221) étant reliés radialement à l'extérieur à la bande de collier de serrage (2).

8. Collier de serrage profilé selon l'une des revendications 1 à 7, **caractérisé en ce que** le prépositionneur (3, 103, 203) est assemblé par liaison de matière, notamment soudé, à la bande de collier de serrage (2) en au moins un point.

9. Collier de serrage profilé selon l'une des revendications 1 à 8, **caractérisé en ce que** le collier de serrage profilé (1, 101, 201) comporte deux mâchoires de serrage (17, 18) et **en ce que** le prépositionneur (3, 103, 203) est assemblé à la bande de collier de serrage (2) en au moins deux points dans la zone des mâchoires de serrage (17, 18).

10. Collier de serrage profilé selon l'une des revendications 1 à 9, **caractérisé en ce que** le prépositionneur (3, 103, 203) maintient le collier de serrage profilé (1, 101, 201) sous une précontrainte radiale avec une force de ressort.
